# EUROPEAN PATENT APPLICATION

(11) **EP 4 819 024 A1**
(43) Date of publication of application: **07.10.2026**
(21) Application number: 24897570.8
(22) Date of filing: 27.11.2024
(51) Int. Cl.: G06Q 50/10

(54) **SYSTEM, PROGRAM, AND INFORMATION PROCESSING METHOD**

(30) Priority: 27.11.2023 JP 2023199972
(71) Applicant: Avatarin Inc., Tokyo 103-0022 (JP)
(72) Inventor: FUKABORI, Akira, Tokyo 103-0022 (JP); KAJITANI, Kevin, Tokyo 103-0022 (JP); FERNANDO, Charith Lasantha, Tokyo 103-0022 (JP); KARITA, Ryutaro, Tokyo 103-0022 (JP); TSUTSU, Masahiro, Tokyo 103-0022 (JP)
(74) Representative: D Young & Co LLP
(86) International application number: PCT/JP2024/041929
(87) International publication number: WO 2025/115886

(57) **Abstract**

To improve the efficiency of provision of services to customers. A system 1 according to an aspect of the present disclosure includes: an acquiring unit 100 that acquires attribute information of a customer; a storage unit 14 that stores a learning model trained on a relationship between attribute information of each of one or more other customers and operations that a user causes an avatar robot 4 to execute using an operation terminal apparatus 3 in order to provide service to each of the one or more other customers; and an executing unit 104 that, by inputting the attribute information of the customer to the learning model, causes the avatar robot 4 to execute an operation corresponding to the attribute information.

## Description

### Technical Field

The present invention relates to a system, a program, and an information processing method.

### Background Art

Techniques for acquiring attribute information of a customer have conventionally been known. For example, Patent Literature 1 describes a technique that enables the acquisition of customer information related to services that customers can use, regardless of whether they are registered members or not.

### Citation List

### Patent Literature

Patent Literature 1: Japanese Patent Laid-Open No. 2022-000794

### Summary of Invention

### Technical Problem

However, Patent Literature 1 is unable to sufficiently improve the efficiency of the provision of services to customers.

In consideration thereof, an object of the present invention is to improve the efficiency of the provision of services to customers.

### Solution to Problem

A system according to an aspect of the present disclosure includes: a storage unit that stores a learning model trained on a relationship between attribute information of each of one or more other customers and operations that a user causes an avatar robot to execute using an operation terminal apparatus in order to provide service to each of the one or more other customers; and an executing unit that, by inputting the attribute information of the customer to the learning model, causes the avatar robot to execute an operation corresponding to the attribute information.

A system according to another aspect of the present disclosure acquires information related to a relationship between attribute information of each of one or more customers and operations that a user causes an avatar robot to execute using an operation terminal apparatus in order to provide service to each of the one or more customers.

A program according to another aspect of the present disclosure causes a computer of an avatar robot to function as: acquiring means that acquires attribute information of a customer; and executing means that executes an operation corresponding to attribute information of a customer by inputting the attribute information to a learning model trained on a relationship between attribute information of each of one or more other customers and operations that a user causes the avatar robot to execute using an operation terminal apparatus in order to provide service to each of the one or more other customers.

An information processing method according to another aspect of the present disclosure causes a system including an avatar robot to execute the steps of: acquiring attribute information of a customer; and causing the avatar robot to execute an operation corresponding to the attribute information of a customer by inputting the attribute information to a learning model trained on a relationship between attribute information of each of one or more other customers and operations that a user causes the avatar robot to execute using an operation terminal apparatus in order to provide service to each of the one or more other customers.

### Advantageous Effects of Invention

According to the present disclosure, the efficiency of the provision of services to customers can be improved.

### Brief Description of Drawings

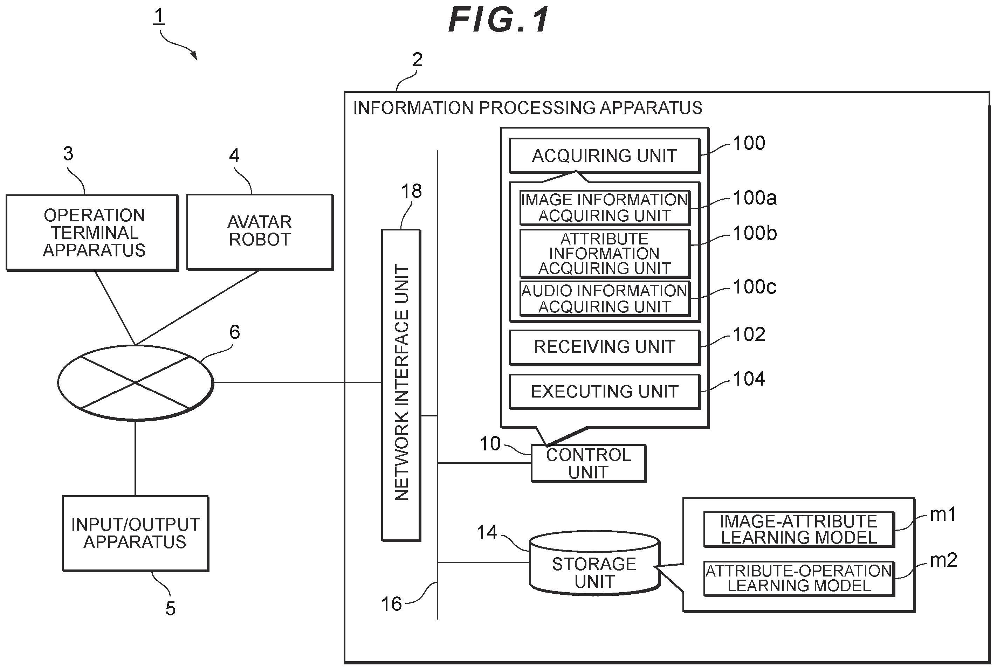

[Figure 1] Figure 1 is a functional block diagram of the system 1.
[Figure 2] Figure 2 is a diagram for explaining an example of operations by the system 1 according to the first embodiment.
[Figure 3] Figure 3 is a diagram for explaining an example of a display screen of the input/output apparatus 5 according to the first embodiment.
[Figure 4] Figure 4 is a diagram for explaining an example of operations by the system 1 according to the first embodiment.
[Figure 5] Figure 5 is a diagram for explaining an example of operations by the system 1 according to the second embodiment.
[Figure 6] Figure 6 is a hardware configuration diagram of various apparatuses included in the system 1.
[Figure 7] Figure 7 is a diagram for explaining another example of operations by the system 1.
[Figure 8] Figure 8 is a diagram for explaining another example of operations by the system 1.

### Description of Embodiments

Preferred embodiments of the present disclosure will be described with reference to the accompanying drawings. Note that elements given the same reference signs in the respective drawings have the same or similar configurations. In addition, it should be understood that the embodiments described below merely represent examples of the present disclosure and are not intended to limit the contents of the present disclosure.

In the present disclosure, the terms "unit," "means," "apparatus," and "system" do not simply refer to physical means but also include cases where the functions of the "unit," "means," "apparatus," or "system" are realized by software. In addition, the functions of one "unit," "means," "apparatus," or "system" may be realized by two or more physical means, apparatuses, or software, and functions of two or more "units," "means," "apparatuses," or "systems" may be realized by one physical means, apparatus, or software.

### < 1. Outline of System 1 >

An outline of a system 1 according to the present disclosure (hereinafter, simply referred to as "system 1") will be described. In one embodiment, the system 1 generates the following two learning models.
(1) Image-attribute learning model m1: a learning model trained on a relationship between image information generated by an imaging apparatus by capturing an image of a customer (hereinafter referred to as "customer image information") and attribute information of the customer. The image-attribute learning model m1 enables attribute information of the customer to be obtained as output by inputting customer image information.
(2) Attribute-operation learning model m2: a learning model trained on a relationship between attribute information of a customer and operations that a user causes an avatar robot 4 to execute using an operation terminal apparatus 3 in order to provide service to the customer. The attribute-operation learning model m2 enables information that causes the avatar robot 4 to execute an operation of providing a service to the customer to be obtained as output by inputting attribute information of the customer.

After generating the learning models described above, the system 1 acquires attribute information of a customer by inputting customer image information generated by an imaging apparatus of the avatar robot 4 into the image-attribute learning model m1. Next, the system 1 acquires information related to an operation of the avatar robot 4 by inputting the attribute information of the customer into the attribute-operation learning model m2. Next, based on the information related to the operation, the system 1 causes the avatar robot 4 to execute an operation of providing a service to the customer. The system 1 can cause the avatar robot 4 to reproduce a service provision method of the user.

Note that in the present disclosure, services include activities and benefits provided in response to explicit or implicit requirements of customers. A service need not be an independent object of commercial transactions. The provision of services to customers includes, for example, providing customer service, providing customers visiting a facility with a guided tour of the facility, and supplying products to customers.

In addition, in the present disclosure, improving the efficiency of the provision of services to customers includes providing services of higher quality and suppressing cost related to the provision of services.

In addition, in the present disclosure, generation of image information by an imaging apparatus includes processes of converting a subject in real space into image data (for example, a JPEG file, a GIF file, and the like) via an imaging element or the like. Furthermore, in the present disclosure, generation of audio information by an audio input apparatus includes, for example, processes of converting audio such as human voice into audio data (for example, an MP3 file, a WAV file, and the like) via a microphone or the like.

### < 2. Functional Configuration of System 1 >

The system 1 includes an information processing apparatus 2, an operation terminal apparatus 3, the avatar robot 4, an input/output apparatus 5, and a communication network 6. The information processing apparatus 2, the operation terminal apparatus 3, the avatar robot 4, and the input/output apparatus 5 are configured to be capable of communicating with each other via the communication network 6.

### - Operation Terminal Apparatus 3 -

The operation terminal apparatus 3 is a terminal apparatus used by the user to operate the avatar robot 4. The operation terminal apparatus 3 may be a personal computer, a smartphone, a tablet terminal, a controller equipped with a joystick and buttons, or the like.

In one embodiment, the operation terminal apparatus 3 is equipped with an imaging apparatus that captures images and an audio input apparatus for inputting audio. The user operating the operation terminal apparatus 3 includes causing the imaging apparatus of the operation terminal apparatus 3 to capture the user's own facial expression. In addition, the user operating the operation terminal apparatus 3 includes causing the audio input apparatus of the operation terminal apparatus 3 to acquire the user's voice. Hereinafter, image information generated by the imaging apparatus of the operation terminal apparatus 3 by capturing an image of the user will be referred to as "user image information". In addition, audio information generated by the audio input apparatus of the operation terminal apparatus 3 by acquiring the user's voice will be referred to as "user audio information".

### - Avatar Robot 4 -

The avatar robot 4 is an apparatus that serves as the user's avatar to provide service to customers in remote locations. The user can be considered the operator of the avatar robot 4. In one embodiment, the avatar robot 4 is equipped with a moving apparatus for moving, an imaging apparatus that captures images, a display apparatus that displays an avatar, an audio output apparatus for outputting audio, and an audio input apparatus for inputting audio.

The moving apparatus is, for example, wheels, legs, a propeller, or the like. The avatar displayed by the display apparatus may be the user's own image such as that displayed during a video call or a 3D model generated by capturing an image of the user. As referred to herein, a "3D model" may be a 3D model modeled after the user themselves or a 3D model of a fictional person or character. The avatar robot 4 can also be referred to as a telepresence robot or a telexistence robot. The avatar robot 4 is not limited to humanoid robots and its form is not particularly limited. Hereinafter, audio information generated by the audio input apparatus of the avatar robot 4 by acquiring a customer's voice will be referred to as "customer audio information".

In one embodiment, the avatar robot 4 receives information related to an operation input to the operation terminal apparatus 3 and operates based on the received information related to an operation. For example, when an operation related to designation of a movement direction is input to the operation terminal apparatus 3, the avatar robot 4 moves in the movement direction.

In addition, the avatar robot 4 changes the facial expression of the avatar being displayed on the display apparatus of the avatar robot 4 to a facial expression that corresponds to the facial expression of the user based on, for example, user image information. In other words, the avatar robot 4 synchronizes the facial expressions of the user with those of the avatar.

In addition, the avatar robot 4 outputs audio corresponding to the user's voice from the audio output apparatus of the avatar robot 4 based on, for example, user audio information.

In one embodiment, the information related to operations of the avatar robot 4 is transmitted to the information processing apparatus 2. The information related to operations of the avatar robot 4 includes information indicating when and what operations the avatar robot 4 has performed. In response thereto, the information processing apparatus 2 stores the received information related to operations in order to generate the attribute-operation learning model m2.

In one embodiment, the avatar robot 4 may be equipped with various instruments and may transmit measurement results of the various instruments to the information processing apparatus 2 as a part of the information related to operations of the avatar robot 4. For example, the avatar robot 4 may be equipped with a position information sensor (for example, a GPS), an acceleration sensor, an angular acceleration sensor, a distance sensor, a temperature sensor, a pressure sensor, and the like.

### - Input/Output Apparatus 5 -

The input/output apparatus 5 is equipped with an output unit that outputs various types of information generated or acquired by the avatar robot 4 to the user and an input unit that receives input of attribute information of a customer from the user. The input/output apparatus 5 may be a personal computer, a smartphone, a tablet terminal, or the like.

In one embodiment, the output unit displays an image showing the customer to the user based on customer image information. In addition, in one embodiment, the output unit outputs audio corresponding to the customer's voice to the user based on customer audio information. The output unit may output past recordings (for example, video and audio recordings) of various types of information generated by the avatar robot 4 or may output various types of information in real time.

In one embodiment, the input unit receives input of attribute information of a customer from a user who has viewed an image of the customer.

### - Information Processing Apparatus 2 -

The information processing apparatus 2 is an apparatus that generates the image-attribute learning model m1 and the attribute-operation learning model m2 and controls operations of the avatar robot 4.

The information processing apparatus 2 includes a control unit 10, a storage unit 14, a network interface unit 18, and a bus 16. The control unit 10, the storage unit 14, and the network interface unit 18 are electrically connected to each other via the bus 16.

### ~ Storage Unit 14 ~

The storage unit 14 stores the image-attribute learning model m1 and the attribute-operation learning model m2 in addition to various programs to be executed by the control unit 10 to be described later. The image-attribute learning model m1 and the attribute-operation learning model m2 may be learning models including a neural network and, for example, may be large-scale deep learning models such as Transformer. Data (training data/determination data) to be input to such learning models may have been subjected to dimensional compression or feature extraction as appropriate.

### (Image-Attribute Learning Model m1)

The image-attribute learning model m1 is a learning model generated by training it on a relationship between customer image information and attribute information of a customer. In one embodiment, the image-attribute learning model m1 is generated by learning a plurality of pieces of training data in which attribute information of a customer related to customer image information is associated with a feature amount of the customer image information. The attribute information of a customer can be considered a label set to the customer.

### (Attribute-Operation Learning Model m2)

The attribute-operation learning model m2 is a learning model generated by training it on a relationship between attribute information of a customer and operations that a user causes the avatar robot 4 to execute using the operation terminal apparatus 3 in order to provide service to the customer. In one embodiment, the attribute-operation learning model m2 is generated by learning a plurality of pieces of training data in which information related to operations that the user causes the avatar robot 4 to execute using the operation terminal apparatus 3 is associated with attribute information of a customer. In other words, the attribute-operation learning model m2 may learn, as training data, information indicating what operations the user had caused the avatar robot 4 to perform for which customer.

In one embodiment, the operations that the user causes the avatar robot 4 to execute using the operation terminal apparatus 3 (in other words, operations learned by the attribute-operation learning model m2) include causing the avatar robot 4 to move toward the customer. In other words, the attribute-operation learning model m2 may learn, as training data, information indicating in what way the user had caused the avatar robot 4 to move for which customer.

In addition, in one embodiment, the operations that the user causes the avatar robot 4 to execute using the operation terminal apparatus 3 include changing the facial expression of the avatar displayed on the display apparatus of the avatar robot 4. In other words, the attribute-operation learning model m2 may learn, as training data, information indicating what kind of facial expression the user had caused the avatar to wear for which customer. Note that when the avatar robot 4 changes the facial expression of the avatar based on user image information, the user changing the facial expression of the avatar includes causing the imaging apparatus of the operation terminal apparatus 3 to capture the user's own facial expression.

In addition, in one embodiment, the operations that the user causes the avatar robot 4 to execute using the operation terminal apparatus 3 include outputting audio from the audio output apparatus of the avatar robot 4. In other words, the attribute-operation learning model m2 may learn, as training data, information indicating what kind of audio the user had caused the avatar robot 4 to output for which customer. Note that when the audio output apparatus of the avatar robot 4 outputs audio based on user audio information, the user outputting audio from the audio output apparatus of the avatar robot 4 includes the user causing the audio input apparatus of the operation terminal apparatus 3 to acquire the user's voice.

### ~ Control Unit 10 ~

By executing various programs stored in the storage unit 14, the control unit 10 functions as an acquiring unit 100, a receiving unit 102, and an executing unit 104.

### (Acquiring unit 100)

The acquiring unit 100 acquires various types of information necessary for the information processing apparatus 2 to operate. In one embodiment, the acquiring unit 100 includes an image information acquiring unit 100a, an attribute information acquiring unit 100b, and an audio information acquiring unit 100c.

The image information acquiring unit 100a acquires customer image information. The customer image information is, for example, information related to an image showing the appearance, facial expression, belongings, location, action, and the like of a customer. The customer image information may be information related to a moving image.

In one embodiment, the image information acquiring unit 100a acquires customer image information generated by the imaging apparatus of the avatar robot 4 by capturing an image of the customer.

The attribute information acquiring unit 100b acquires attribute information of customers. The attribute information of a customer includes information that characterizes the customer. In addition, in one embodiment, the attribute information of a customer includes information for specifying requests, questions, complaints, and the like of the customer. In addition, in one embodiment, the attribute information of a customer includes both information that remains fixed and unchanged for at least a predetermined period (for example, while the customer is receiving the service) and information that may change constantly even while the customer is receiving the service. The information related to the customer that remains fixed for at least a predetermined period includes information related to, for example, at least a part of the age, gender, accompanying person, nationality, and belongings of the customer. The information that may change while the customer is receiving the service includes, for example, a gaze, action, degree of satisfaction, position, and the like of the customer. Note that the position of the customer changes when, for example, the avatar robot 4 guides the customer to a predetermined location as a part of the service.

Note that in the present disclosure, the degree of satisfaction of a customer includes an index indicating the degree of satisfaction or a degree to which the customer experiences delight that exceeds their expectations with respect to a service or facilities. The degree of satisfaction of a customer includes, for example, an assessment of the quality of service and an assessment of usability of facilities. The degree of satisfaction of a customer may include at least one of the degree of satisfaction of the customer before the avatar robot 4 provides service to the customer and the degree of satisfaction of the customer after the avatar robot 4 provides service to the customer. For example, the degree of satisfaction of a customer can be inferred from the facial expression, tone of voice, gestures, and the like of the customer.

In one embodiment, the attribute information acquiring unit 100b acquires attribute information of a customer by inputting the customer image information acquired from the image information acquiring unit 100a to the image-attribute learning model m1.

Note that in the present disclosure, acquiring information includes making the information processable in the control unit 10. For example, acquiring information includes receiving the information from another apparatus, reading the information from the storage unit 14, and generating the information through predetermined processing.

The audio information acquiring unit 100c acquires audio information related to audio input to the audio input apparatus of the avatar robot 4. In addition, the audio information acquiring unit 100c updates the attribute information of a customer based on audio information through speech recognition, natural language processing, and the like. For example, when the audio information is related to a comment by a customer stating that "I'm having trouble with so-and-so," the audio information acquiring unit 100c can add information stating that "customer has trouble with so-and-so" to the attribute information of the customer.

### (Receiving unit 102)

The receiving unit 102 receives information related to an operation input to the operation terminal apparatus 3 by the user.

### (Executing unit 104)

The executing unit 104 causes the avatar robot 4 to execute predetermined operations. In one embodiment, by inputting attribute information of a customer acquired by the attribute information acquiring unit 100b to the attribute-operation learning model m2, the executing unit 104 causes the avatar robot 4 to execute an operation corresponding to the attribute information.

In one embodiment, the executing unit 104 refers to the attribute-operation learning model m2 and causes the avatar robot 4 to move toward a customer according to the attribute information of the customer. For example, when a customer appears to be hurriedly searching for something while looking around, the executing unit 104 may cause the avatar robot 4 to move straight toward the customer. In addition, for example, when a customer is walking while viewing a map on their smartphone, the executing unit 104 may cause the avatar robot 4 to move so as to approach the customer slowly while moving parallel to the customer.

In addition, in one embodiment, the executing unit 104 refers to the attribute-operation learning model m2 and changes the facial expression of the avatar displayed on the display apparatus of the avatar robot 4 to a facial expression corresponding to the attribute information of the customer. For example, when the customer is smiling or showing a relieved expression, the executing unit 104 may change the avatar's facial expression to a smile. In addition, for example, when the customer is angry, the executing unit 104 may change the avatar's facial expression to an apologetic facial expression.

In addition, in one embodiment, the executing unit 104 refers to the attribute-operation learning model m2 and causes audio corresponding to the attribute information of the customer to be output from the audio output apparatus of the avatar robot 4. For example, when a customer is wandering around carrying luggage, the executing unit 104 may cause the avatar robot 4 to output an audio prompt asking, "Are you looking for the luggage check counter?" In addition, for example, when a customer appears troubled while using an apparatus for performing a predetermined procedure (for example, an airline ticket machine, a parking payment machine at a shopping center, or a ticket machine at a restaurant), the executing unit 104 may cause the avatar robot 4 to output an audio prompt asking, "Are you having trouble using the apparatus?"

In addition, in one embodiment, in response to predetermined conditions being satisfied, the executing unit 104 causes the avatar robot 4 to perform an operation corresponding to an operation received by the receiving unit 102 either in place of or in addition to an operation corresponding to the attribute information of a customer. In other words, while the executing unit 104 operates the avatar robot 4 autonomously based on the attribute-operation learning model m2 by default, the executing unit 104 may operate the avatar robot 4 based on operations by the user when predetermined conditions are met.

In one embodiment, the predetermined conditions are met when it is difficult for the avatar robot 4 to autonomously provide a service to a customer. For example, when a request made by the customer (an example of attribute information of the customer) is unique and the attribute-operation learning model m2 has not been trained using such a request as training data, the system 1 determines that the predetermined conditions have been met. In addition, for example, when an emotion of the customer (an example of attribute information of the customer) as specified from a facial expression and a voice tone of the customer is significantly negative, the system 1 determines that the predetermined conditions have been met.

In addition, in one embodiment, notifications to a customer may be restricted with respect to whether the executing unit 104 is causing the avatar robot 4 to perform an operation corresponding to the attribute information of the customer or an operation corresponding to an operation received by the receiving unit 102. In other words, the system 1 may be configured such that customers cannot distinguish whether the avatar robot 4 is operating autonomously based on the attribute-operation learning model m2 or is operating based on operations by the user.

Note that in the present disclosure, the avatar robot 4 operating autonomously includes the avatar robot 4 operating independently of operations by the user (more specifically, operations by the user with respect to the operation terminal apparatus 3). In other words, the avatar robot 4 operating through collaborative operations of the avatar robot 4 and the information processing apparatus 2 is included in the avatar robot 4 operating autonomously.

### - Communication Network 6 -

The communication network 6 realizes communication among the information processing apparatus 2, the operation terminal apparatus 3, the avatar robot 4, and the input/output apparatus 5. In one embodiment, the communication network 6 realizes communication among the respective apparatuses according to the TCP/IP protocol. The communication network 6 may be a closed network that is isolated from the Internet or a private cloud network.

### < 3. Operations of System 1 >

### - First Embodiment -

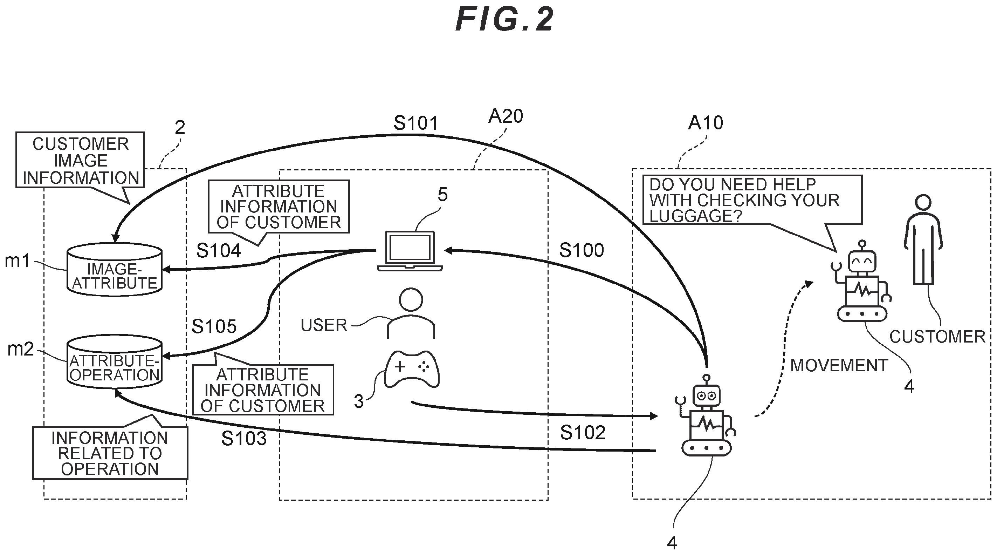

An example of operations of the system 1 will be described with reference to Figures 2 to 4. Hereinafter, the avatar robot 4 will be described as being deployed at an airport AR10 and providing service to customers in the airport AR10 while moving around the airport AR10. In addition, the user will be described as being in an operation room AR20 that differs from the airport AR10. Furthermore, in this example, the user causes the avatar robot 4 to execute predetermined operations (refer to S100 to S102 to be described later). Subsequently, the user will be described as inputting attribute information of a customer while viewing a recorded video generated by the imaging apparatus of the avatar robot 4 by capturing an image of the customer (refer to S104 to be described later).

### ~ Method of Generating Learning Models ~

Figures 2 to 3 are diagrams for explaining an example of a method of generating the image-attribute learning model m1 and the attribute-operation learning model m2.

First, the avatar robot 4 transmits customer image information generated by the imaging apparatus of the avatar robot 4 by capturing an image of a customer to the input/output apparatus 5 (S100). The input/output apparatus 5 displays an image related to the received customer image information to the user in real time. In addition, the input/output apparatus 5 stores the customer image information for input of attribute information of a customer by the user (to be described later).

Next, the avatar robot 4 transmits the customer image information to the information processing apparatus 2 (S101). The information processing apparatus 2 stores the customer image information at least temporarily to have the image-attribute learning model m1 learn a relationship between the customer image information and attribute information of the customer to be received in S104 to be described later.

Next, the user causes the avatar robot 4 to execute a predetermined operation by operating the operation terminal apparatus 3 while viewing the customer image information displayed in real time by the input/output apparatus 5 (S102). The predetermined operation includes an operation for providing a service to the customer.

In this example, by operating the operation terminal apparatus 3, the user causes the avatar robot 4 to move closer to the customer, changes the facial expression of the avatar displayed on the display apparatus of the avatar robot 4 to a smile, and causes the audio output apparatus of the avatar robot 4 to output an audio prompt asking, "Do you need help with checking your luggage?"

Next, the avatar robot 4 transmits information related to the operation that the avatar robot 4 was caused to execute by the user to the information processing apparatus 2 (S103). The information related to the operation by the avatar robot 4 may include at least a part of an operation log of the avatar robot 4. The information processing apparatus 2 stores the information related to the operation at least temporarily to have the attribute-operation learning model m2 learn a relationship between the information related to the operation by the avatar robot 4 and the attribute information of the customer to be received in S105 to be described later.

After the provision of service to the customer is completed, the user inputs the attribute information of the customer while viewing the recorded video of the customer via the input/output apparatus 5 (S104 to 105).

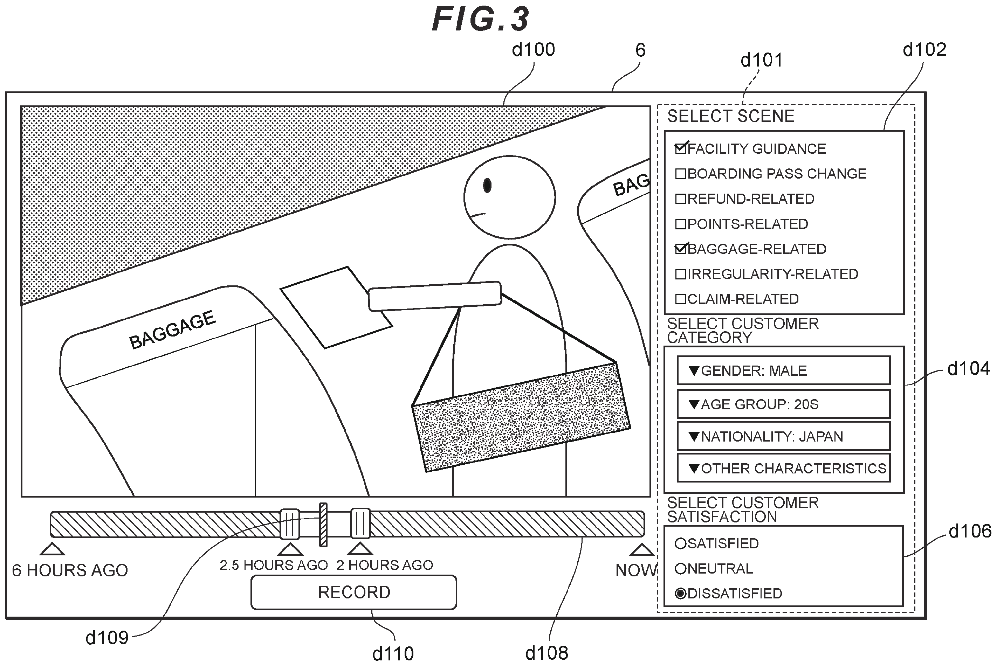

Figure 3 is a diagram for explaining an example of a display screen of the input/output apparatus 5. The display screen example in Figure 3 displays an image d100, a customer attribute input area d101, a time interval designation tool d108, a playback position d109, and a record button d110.

The image d100 is displayed based on customer image information generated by the imaging apparatus of the avatar robot 4 by capturing an image of a customer. In this example, the image d100 shows a customer carrying luggage and operating a touch panel of a self-service baggage check-in machine. Note that in this example, the image d100 is considered a part of the recorded video.

The customer attribute input area d101 is an area where the user enters the attribute information of a customer. In the display screen example in Figure 3, a scene selection area d102, a customer category selection area d104, and a customer satisfaction selection area d106 are displayed in the customer attribute input area d101.

The scene selection area d102 displays checkboxes for the user to select a scene corresponding to the image d100. In the display screen example in Figure 3, the scenes available for selection by the user are: "facility guidance," "boarding pass change," "refund-related," "points-related," "baggage-related," "irregularity-related," and "claim-related." In the display screen example in Figure 3, two of these scenes, namely, "facility guidance" and "baggage-related," have been selected. Note that since scenes correspond to a position of the customer and/or a procedure to be performed by the customer, scenes are included in the attribute information of the customer.

The customer category selection area d104 displays dropdown buttons for the user to select a category of the customer corresponding to the image d100. In the display screen example in Figure 3, dropdown buttons for the items "gender," "age group," "nationality," and "other characteristics" are displayed. By pressing any dropdown button, the user can select a setting value for the dropdown button. For example, when the user presses the dropdown button for "age group", the input/output apparatus 5 displays "10s,", "20s,", "30s," and the like as candidates of the setting value of "age group". In response thereto, by selecting any setting value, the user can set the selected setting value to the dropdown button. In this example, the setting values "male," "20s," and "Japan" have been set for the items "gender," "age group," and "nationality," respectively.

In addition, by pressing the dropdown of the item labeled "other characteristics," the user can input attribute information of a customer other than gender, age group, and nationality. As attribute information of the customer, for example, with respect to each of accompanying persons, gaze, action, luggage, and position, the user can associate setting values of "none (1 person)," "looking at the touch panel of the self-service baggage check-in machine," "using the touch panel of the self-service baggage check-in machine," "one shoulder bag," and "in front of the self-service baggage check-in machine".

The customer satisfaction selection area d106 displays radio buttons for the user to select a degree of satisfaction of the customer according to the image d100. Since the facial expression of the customer according to the image d100 appears stern, the user can infer that the customer does not understand how to use the touch panel of the self-service baggage check-in machine and is therefore dissatisfied in terms of the ease of use of the equipment. Therefore, in the display screen example in Figure 3, the stage "dissatisfied" has been selected from the three stages of "satisfied," "neutral," and "dissatisfied."

The time interval designation tool d108 is an element for designating a time interval with which contents input to the customer attribute input area d101 are to be associated from a predetermined time interval of the recorded video (in this example, from "now" to "6 hours ago"). In other words, the user can designate a time interval of customer image information to be used for learning by operating the time interval designation tool d108. In the display screen example in Figure 3, a time interval from "2 hours ago" to "2.5 hours ago" has been designated as the time interval of customer image information to be used for learning.

The playback position d109 is an element indicating a time point corresponding to the image d100 in a predetermined time interval of the recorded video. In the display screen example in Figure 3, the playback position d109 indicates roughly the midpoint between "2 hours ago" and "2.5 hours ago." By moving the playback position d109 along the time interval designation tool d108 while pressing down on the playback position d109, the user can change the image d100 to an image corresponding to another time point.

The record button d110 is a button that enables, when pressed down by the user, contents input to the customer attribute input area d101 (in other words, attribute information of a customer) to be transmitted to the information processing apparatus 2.

Based on the user pressing down on the record button d110, the input/output apparatus 5 associates the image d100 of the time interval selected in the time interval designation tool d108 with the input attribute information of the customer and transmits information to be learned by the image-attribute learning model m1 to the information processing apparatus 2 (S104).

In the display screen example in Figure 3, when the user presses down on the record button d110, the image-attribute learning model m1 learns by associating (1) and (2) below.
(1) Customer image information related to image d100 from "2 hours ago" to "2.5 hours ago."
(2) Attribute information of a customer indicating that "gender," "age group," and "nationality" are "male," "20s," and "Japan," respectively, and that the customer is "dissatisfied" in scenes of "facility guidance" and/or "baggage-related".

In addition, based on the user pressing down on the record button d110, the input/output apparatus 5 associates information related to operations of the avatar robot 4 during the time interval selected in the time interval designation tool d108 with the input attribute information of the customer and transmits information to be learned by the attribute-operation learning model m2 to the information processing apparatus 2 (S105).

In the display screen example in Figure 3, when the user presses down on the record button d110, the attribute-operation learning model m2 learns by associating (3) and (4) below.

(3) Attribute information of a customer indicating that "gender," "age group," and "nationality" are "male," "20s," and "Japan," respectively, and that the customer is "dissatisfied" in scenes of "facility guidance" and/or "baggage-related".

(4) Information related to operations of the avatar robot 4 from "2 hours ago" to "2.5 hours ago."

The system 1 generates the image-attribute learning model m1 and the attribute-operation learning model m2 for a plurality of customers by repeating operations similar to S100 to 105.

To summarize operations by the system 1 to generate learning models, the information processing apparatus 2 generates the image-attribute learning model m1 by having the image-attribute learning model m1 learn the relationship between the customer image information (refer to S101) generated by the image-capturing apparatus of the avatar robot 4 by capturing an image of the customer and attribute information (refer to S104) of the customer related to the customer image information input by the user to the input/output apparatus 5. In addition, the information processing apparatus 2 generates the attribute-operation learning model m2 by having the attribute-operation learning model m2 learn the relationship between attribute information (refer to S105) of the customer related to the customer image information input by the user to the input/output apparatus 5 and information (refer to S103) related to operations that the user causes the avatar robot 4 to execute in order to provide service to the customer.

### ~ Method of Using Learning Model ~

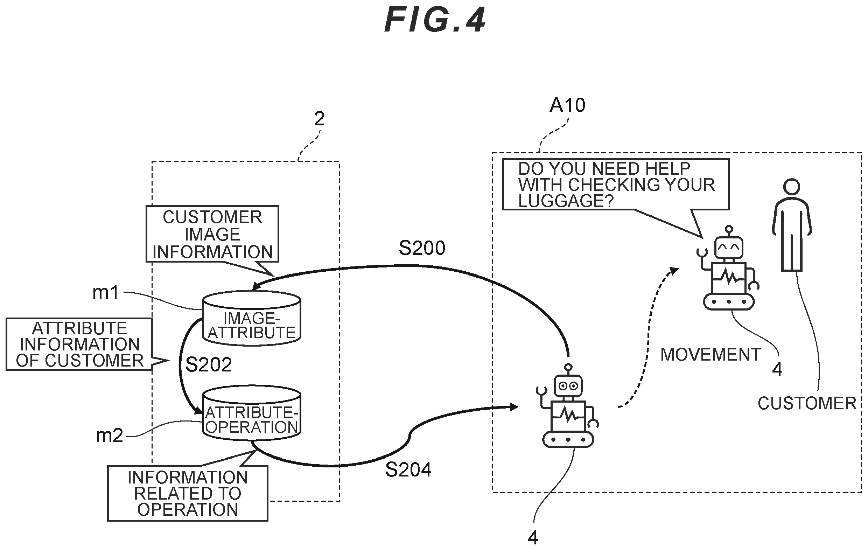

Figure 4 is a diagram for explaining an example of a method of the system 1 to operate the avatar robot 4 independently of operations by the user by utilizing the image-attribute learning model m1 and the attribute-operation learning model m2. First, the avatar robot 4 transmits customer image information generated by the imaging apparatus of the avatar robot 4 by capturing an image of a customer to the information processing apparatus 2 (S200).

Next, by inputting the received customer image information to the image-attribute learning model m1, the information processing apparatus 2 specifies attribute information of the customer related to the customer image information and inputs the specified attribute information of the customer to the attribute-operation learning model m2 (S202).

Next, the information processing apparatus 2 causes the avatar robot 4 to execute operations corresponding to the attribute information of the customer specified by inputting the attribute information of the customer to the attribute-operation learning model m2 (S204).

### - Second embodiment -

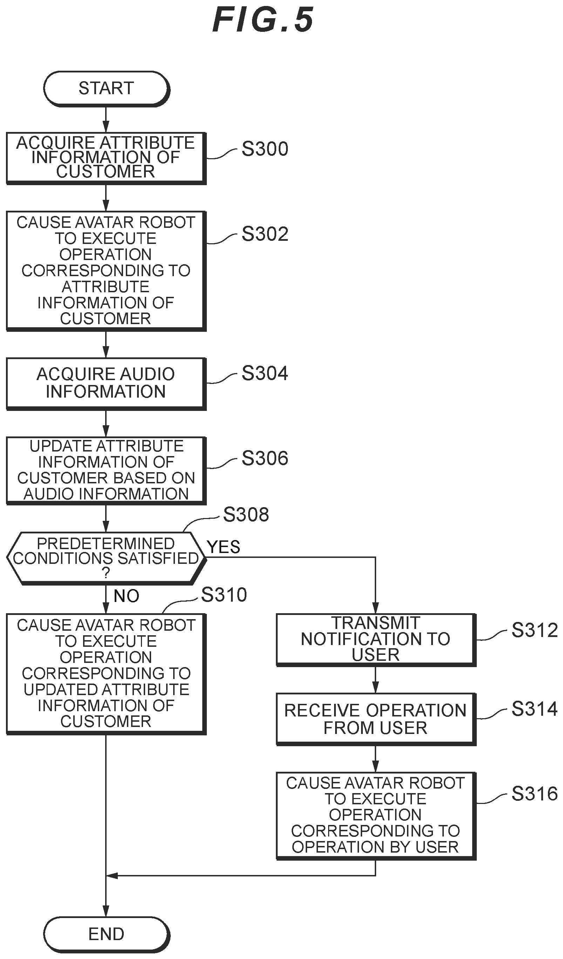

Another example of operations of the system 1 will be described with reference to Figure 5. In the first embodiment, an example where the avatar robot 4 operates based on operations of the user has been described with reference to Figure 2 and an example where the avatar robot 4 operates based on the image-attribute learning model m1 and the attribute-operation learning model m2 independently of operations by the user has been described with reference to Figure 4. In contrast, a second embodiment will describe an example of the system 1 that controls, depending on whether or not predetermined conditions are met, whether to cause the avatar robot 4 to operate based on operations by the user or to operate independently of operations by the user.

In the following example, it is assumed that, in an initial state, the image-attribute learning model m1 and the attribute-operation learning model m2 have already been generated and the avatar robot 4 operates independently of operations by the user as described with reference to Figure 4.

First, the information processing apparatus 2 acquires attribute information of a customer (S300). The attribute information of a customer may be specified based on, for example, customer image information and the image-attribute learning model m1.

Next, the information processing apparatus 2 causes the avatar robot 4 to execute operations corresponding to the attribute information of the customer (S302). The operations corresponding to the attribute information of a customer may be specified based on, for example, attribute information of the customer specified in S300 and the attribute-operation learning model m2. In this example, the information processing apparatus 2 is to cause the avatar robot 4 to output an audio prompt asking, "Is there anything I can help you with?"

Next, the information processing apparatus 2 acquires audio information related to a response by the customer from the avatar robot 4 (S304), and updates the attribute information of the customer based on the audio information (S306).

Next, the information processing apparatus 2 determines whether or not predetermined conditions are satisfied (S308). In this example, the information processing apparatus 2 determines whether or not the attribute-operation learning model m2 can correspond to the updated attribute information of the customer. Specifically, the information processing apparatus 2 determines whether or not the updated attribute information of the customer corresponds to an "outlier" specified from the attribute information of one or more other customers. More specifically, a distribution of feature amounts of attribute information of each of one or more other customers and a feature amount of the updated attribute information of the customer are compared with each other to determine whether or not an occurrence probability of the updated attribute information of the customer is equal to or lower than a predetermined threshold.

When the information processing apparatus 2 determines that the prescribed conditions are satisfied (S308: Yes), the information processing apparatus 2 transmits a notification to the user (S312). Next, the information processing apparatus 2 receives information related to an operation of the operation terminal apparatus 3 by the user (S314), and causes the avatar robot 4 to execute operations corresponding to the operation (S316). Note that the switch by the avatar robot 4 from the state where the avatar robot 4 operates independently of operations by the user to the state where the avatar robot 4 operates based on operations by the user need not be notified to the customer. In other words, the system 1 may be configured such that customers cannot determine whether operations of the avatar robot 4 is being performed by a user or being performed autonomously.

On the other hand, when the information processing apparatus 2 determines that the prescribed conditions are not satisfied (S308: No), the information processing apparatus 2 causes the avatar robot 4 to execute operations corresponding to the updated attribute information of the customer based on the attribute-operation learning model m2 (S310).

### < 4. Advantageous Effects of System 1 >

The system 1 according to an aspect of the present disclosure includes: the acquiring unit 100 that acquires attribute information of a customer; the storage unit 14 that stores the attribute-operation learning model m2 trained on a relationship between attribute information of each of one or more other customers and operations that a user causes the avatar robot 4 to execute using the operation terminal apparatus 3 in order to provide service to each of the one or more other customers; and the executing unit 104 that, by inputting the attribute information of the customer to the attribute-operation learning model m2, causes the avatar robot 4 to execute an operation corresponding to the attribute information. In one embodiment, the attribute information of a customer includes information related to at least a part of age, gender, gaze, action, accompanying person, nationality, belongings, degree of satisfaction, and position of the customer.

According to the system 1, the efficiency of the provision of services to customers can be improved. The system 1 causes the avatar robot 4 to operate autonomously based on records of past service provision by the user (for example, what services were provided to which customers). In other words, the system 1 can cause the avatar robot 4 to reproduce a service provision method of the user. Accordingly, the need for the user to operate the avatar robot 4 themselves using the operation terminal apparatus 3 is reduced, thereby enabling cost savings on labor and the provision of simultaneous, parallel services to a large number of customers.

In one embodiment, the attribute information of a customer is specified based on image information generated by the imaging apparatus of the avatar robot 4 by capturing an image of a customer.

Generally, when the user causes the avatar robot 4 to operate using the operation terminal apparatus 3, the user determines the attribute information of the customer while viewing, with the input/output apparatus 5, an image captured by the imaging apparatus of the avatar robot 4. The configuration described above can cause the avatar robot 4 to reproduce a determination method of attribute information of customers by the user.

In one embodiment, the avatar robot 4 is an apparatus capable of moving in a predetermined region.

To provide high-quality service to customers, it is preferable for the avatar robot 4 to move toward a customer rather than have the customer move toward the avatar robot 4. Since the configuration described above enables the avatar robot 4 to move toward customers, services with higher quality can be provided to the customers.

In one embodiment, the operations that the user causes the avatar robot 4 to execute using the operation terminal apparatus 3 include causing the avatar robot 4 to move toward each of one or more other customers, and the operations that the executing unit 104 causes the avatar robot 4 to execute include causing the avatar robot 4 to move toward a customer according to attribute information of the customer.

To provide high-quality service to customers, the method of approaching the customers is crucial. For example, slowly approaching a customer who appears to be in a hurry may fail to meet the customer's needs. According to the configuration described above, the system 1 can cause the avatar robot 4 to reproduce a method of approaching customers based on operations by the user.

In one embodiment, the avatar robot 4 may be equipped with a display apparatus that displays an avatar, the operations that the user causes the avatar robot 4 to execute using the operation terminal apparatus 3 include changing the facial expression of the avatar, and the operations that the executing unit 104 causes the avatar robot 4 to execute include changing the facial expression of the avatar to a facial expression that corresponds to the attribute information of the customer. In addition, in one embodiment, a change in the facial expression of the avatar by the user is performed based on image information generated by the imaging apparatus of the operation terminal apparatus 3 by capturing an image of the user.

To provide high-quality service to customers, the facial expressions shown to the customers are crucial. For example, providing service with a smile to a customer who appears to be angry may compromise customer satisfaction. According to the configuration described above, the system 1 can cause the avatar to reproduce how the user uses facial expressions.

In one embodiment, the operations that the user causes the avatar robot 4 to execute using the operation terminal apparatus 3 include causing an audio output apparatus of the avatar robot 4 to output audio, and the operations that the executing unit 104 causes the avatar robot 4 to execute include causing the audio output apparatus of the avatar robot 4 to output audio that corresponds to the attribute information of the customer. In addition, in one embodiment, the output of audio from the audio output apparatus of the avatar robot 4 caused by the user using the operation terminal apparatus 3 is performed based on audio information generated by the audio input apparatus of the operation terminal apparatus 3 by acquiring the user's voice.

To provide high-quality service to customers, calling out to the customers is crucial. According to the configuration described above, the system 1 can cause the avatar robot 4 to reproduce how the user calls out.

In one embodiment, the system 1 is further equipped with the receiving unit 102 that receives information related to operations input to the operation terminal apparatus 3 by the user, and in response to predetermined conditions being satisfied, the executing unit 104 causes the avatar robot 4 to perform an operation corresponding to an operation received by the receiving unit 102 either in place of or in addition to an operation corresponding to the attribute information of a customer.

For example, when the attribute information of the customer is unique or when an urgent response is required, autonomous provision of service by the avatar robot 4 may be difficult. According to the configuration described above, even when the avatar robot 4 operates autonomously by default, since the avatar robot 4 can switch to operating based on operations of the user when predetermined conditions are met, the avatar robot 4 can flexibly respond to unforeseen circumstances.

In one embodiment, notifications to a customer are restricted with respect to whether the executing unit 104 is causing the avatar robot 4 to perform an operation corresponding to the attribute information of the customer or an operation corresponding to an operation by the user.

To give customers the impression of consistent service, it may be preferable to not reveal to the customers whether the avatar robot is operating independently of operations by the user or operating based on operations by the user. The configuration described above can give customers the impression of consistent service.

The advantageous effects of the system 1 described above are merely examples and are not intended to limit objects of application of the present disclosure.

### < 5. Hardware Configuration >

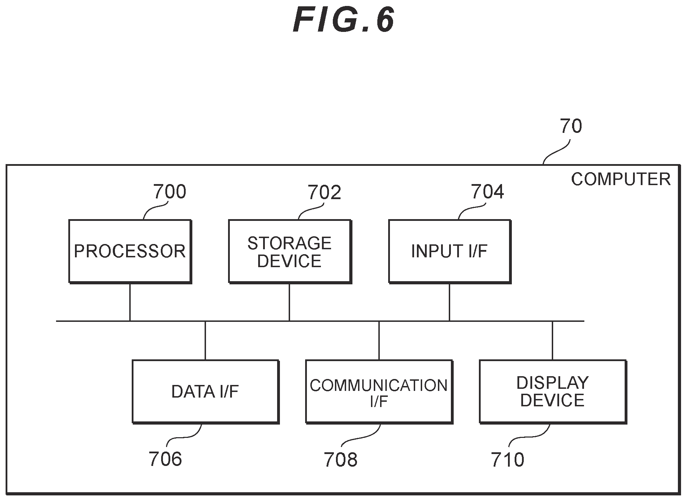

An example of a hardware configuration when realizing the various apparatuses described above with a computer 70 will now be described with reference to Figure 6. Note that the functions of each apparatus can also be distributed across a plurality of apparatuses.

As shown in Figure 6, the computer 70 includes a processor 700, a storage device 702, an input I/F 704, a data I/F 706, a communication I/F 708, and a display device 710.

The processor 700 controls a variety of processing in the computer 70 by executing programs stored in the storage device 702. For example, each functional unit and the like that the control units of the various apparatuses are equipped with can be realized by the processor 700 by executing programs stored in the storage device 702.

The storage device 702 is, for example, a storage medium such as a random access memory (RAM). The RAM temporarily stores program codes of the programs executed by the processor 700 and data required when executing the programs.

Otherwise, the storage device 702 is, for example, a non-volatile storage medium such as a hard disk drive (HDD) or a flash memory. The storage device 702 stores an operating system and various programs for realizing the respective components described above. The storage medium storing the various programs may be a non-transitory computer-readable medium. In addition, the storage device 702 can store tables for registering various types of information and a database for managing the tables. Such programs and data are loaded into the storage device 702 as needed to be referenced by the processor 700.

The input I/F 704 is a device for accepting input from a user. Specific examples of the input I/F 704 include a camera, buttons, a microphone, a keyboard, a mouse, a touch panel, various sensors, and a wearable device. The input I/F 704 may be connected to the computer 70 via an interface such as Universal Serial Bus (USB).

The data I/F 706 is a device for inputting data from outside of the computer 70. Specific examples of the data I/F 706 include drive devices for reading data stored in various storage media. The data I/F 706 may conceivably be provided outside of the computer 70. In this case, the data I/F 706 may be connected to the computer 70 via an interface such as USB.

The communication I/F 708 is a device for performing data communication via the communication network 6 with an apparatus outside of the computer 70 in a wired or wireless manner. The communication I/F 708 may conceivably be provided outside of the computer 70. In this case, the communication I/F 708 may be connected to the computer 70 via an interface such as USB.

The display device 710 is a device for displaying various types of information. Specific examples of the display device 710 may include a liquid crystal display, an organic electro-luminescence (EL) display, and a display of a wearable device. The display device 710 may be provided outside of the computer 70. In this case, the display device 710 may be connected to the computer 70 via a display cable or the like. In addition, when a touch panel is adopted as the input I/F 704, the display device 710 may be integrally configured with the input I/F 704.

Furthermore, the components of the various apparatuses described in the above embodiment are to be realized through predetermined processing performed, in cooperation with other hardware, by the processor 700 executing programs stored in the storage device 702. In other words, these components are contemplated as either software, firmware, or hardware corresponding to the software or firmware, and in either concept, the components may be described as "functions," "means," "parts," "processing circuits," "units," or "modules" and may be read as such.

### < 6. Modifications >

The system 1 described in the above embodiment is merely an example and may be modified as appropriate within a scope where no contradictions arise.

### [Apparatus Storing Image-Attribute Learning Model m1 and Attribute-Operation Learning Model m2]

While the image-attribute learning model m1 and the attribute-operation learning model m2 have been described in the above embodiment as being stored in the storage unit 14 of the information processing apparatus 2, the learning models are not limited thereto. The image-attribute learning model m1 and the attribute-operation learning model m2 may be installed in the avatar robot 4 or stored in a cloud server apparatus other than the information processing apparatus 2.

### [Acquisition Path of Customer Image Information]

While the image information acquiring unit 100a has been described in the above embodiment to acquire customer image information generated by the imaging apparatus of the avatar robot 4 by capturing an image of a customer, the image information acquiring unit 100a is not limited thereto. The image information acquiring unit 100a may acquire customer image information generated by imaging apparatuses (for example, fixed cameras) installed in predetermined areas where the avatar robot 4 can operate (for example, airports, stations, shopping malls, restaurants, and convenience stores) by capturing images of customers. In addition, the image information acquiring unit 100a may acquire customer image information generated by an imaging apparatus of a smartphone owned by a customer by capturing an image of the customer.

### [Acquisition Path of Attribute Information of Customer]

While the attribute information acquiring unit 100b has been described in the above embodiment to acquire attribute information of a customer by inputting the customer image information acquired from the image information acquiring unit 100a to the image-attribute learning model m1, the attribute information acquiring unit 100b is not limited thereto. The attribute information acquiring unit 100b may acquire attribute information of a customer based on input to the operation terminal apparatus 3. In addition, the attribute information acquiring unit 100b may acquire attribute information of a customer generated by the avatar robot 4. In addition, the attribute information acquiring unit 100b may acquire attribute information of a customer stored in a smartphone owned by the customer. In addition, the attribute information acquiring unit 100b may acquire attribute information of a customer from another system that manages customer information. In addition, the attribute information acquiring unit 100b may acquire attribute information of a customer based on identification information of the customer (for example, biological information of the customer, a ticket owned by the customer, and a smartphone of the customer).

### [Information Related to Operations that Avatar Robot 4 was Caused to Execute]

While the attribute-operation learning model m2 has been described in the above embodiment to learn information related to operations that the avatar robot 4 was caused to execute (for example, an operation log of the avatar robot 4) in association with attribute information of a customer, the attribute-operation learning model m2 is not limited thereto. Instead of information related to operations of the avatar robot 4, the attribute-operation learning model m2 may learn information related to operations input to the operation terminal apparatus 3 by the user (for example, an operation log of the operation terminal apparatus 3) in association with attribute information of a customer.

### [Method of Generating Learning Data]

While the user has been described in the above embodiment as inputting, after provision of service to a customer is completed (refer to S100 to 103), a time interval of customer image information to be used for learning and attribute information of the customer to the input/output apparatus 5 while viewing a recorded video (refer to Figure 3 and S104 to 105), the user is not limited thereto. The user may input a time interval of customer image information to be used for learning and attribute information of a customer to the input/output apparatus 5 in real time while providing service to the customer (in other words, while operating the operation terminal apparatus 3). Note that in this case, the input/output apparatus 5 and the operation terminal apparatus 3 may be the same apparatus.

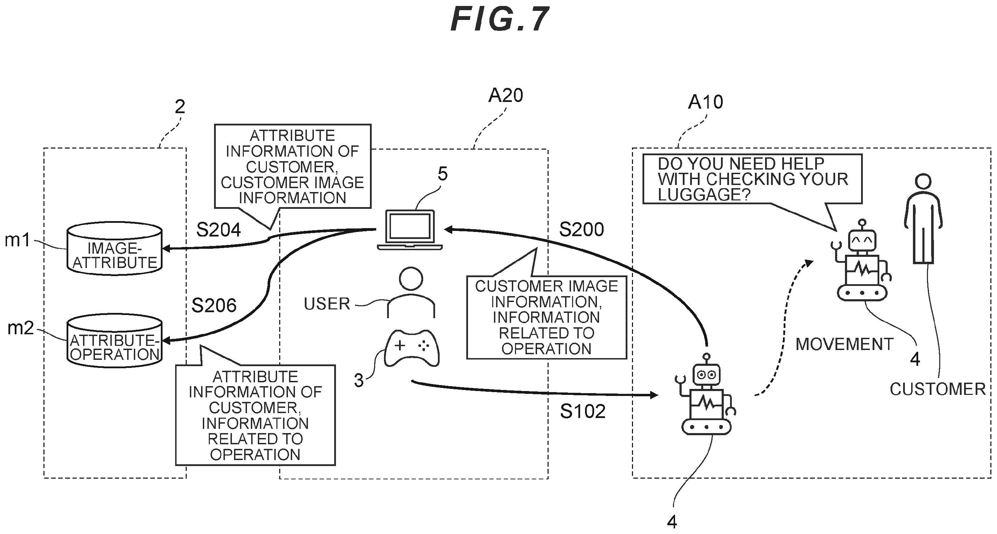

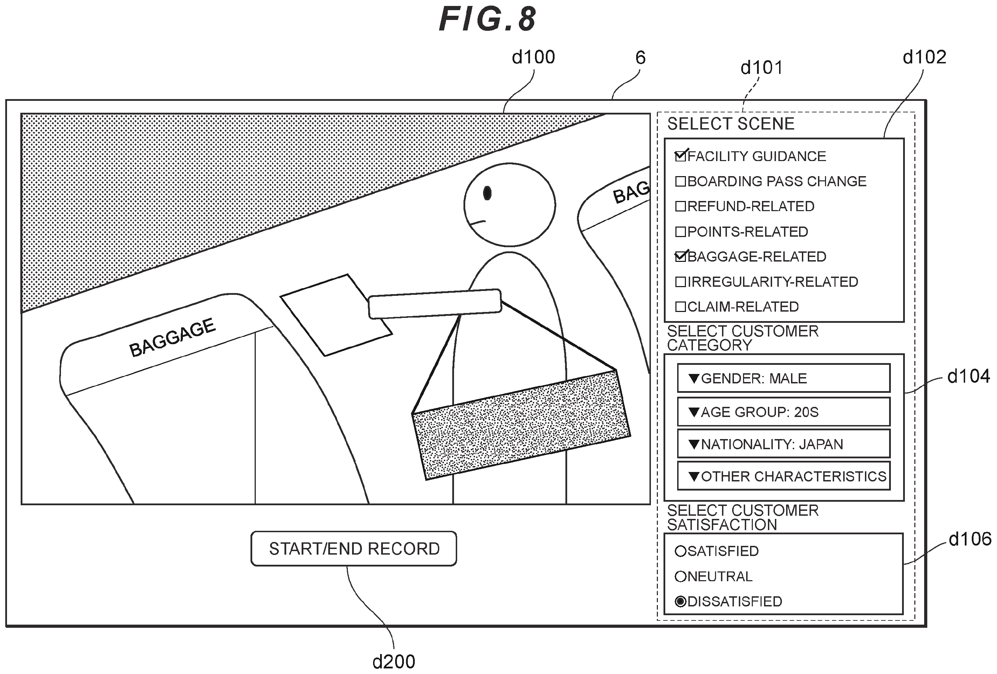

Operations of the system 1 and a display screen example of the input/output apparatus 5 when the user inputs a time interval of customer image information to be used for learning and attribute information of a customer to the input/output apparatus 5 in real time while providing service to the customer will be described with reference to Figures 7 and 8.

Figure 7 is a diagram for explaining operations of the system 1 and a flow of information in this case. In the embodiment described above, the avatar robot 4 has been described to transmit customer image information and information related to operations of the avatar robot 4 to the information processing apparatus 2 and the information processing apparatus 2 has been described to store the information so as to be learned by the image-attribute learning model m1 and the attribute-operation learning model m2 as in S101 and S103 in Figure 2. On the other hand, in the example shown in Figure 7, the avatar robot 4 transmits customer image information and information related to operations of the avatar robot 4 to the input/output apparatus 5 (S200). In response, the input/output apparatus 5 receives designation of a time interval of customer image information to be used for learning and input of attribute information of a customer from the user while displaying customer image information (to be described later with reference to Figure 8). Subsequently, the input/output apparatus 5 transmits the input attribute information of a customer, customer image information in the designated time interval, and information related to operations of the avatar robot 4 in the time interval to the information processing apparatus 2 (S204 and S206). In other words, the input/output apparatus 5 may acquire various types of information from the avatar robot 4, extract information to be used for learning, and transmit the extracted information to the information processing apparatus 2. This avoids straining the communication capacity in the system 1 and the memory capacity of the information processing apparatus 2.

Figure 8 is a diagram showing a display screen example of the input/output apparatus 5 in the example shown in Figure 7. In the embodiment described above, an example has been described where the user designates a past time interval as the time interval of customer image information to be used for learning by operating the time interval designation tool d108. On the other hand, in the display screen example shown in Figure 8, a record start/end button d200 is displayed instead of the time interval designation tool d108. By pressing the record start/end button d200, the user can designate a start and an end of the time interval of the customer image information to be used for learning. For example, when the user presses the record start/end button d200 when customer image information at "12:00" is being displayed in the image d100 and, subsequently, the user presses the record start/end button d200 when customer image information at "12:20" is being displayed in the image d100, customer image information corresponding to the 20 minutes from "12:00" to "12:20" is transmitted to the information processing apparatus 2. At the same time, the information related to operations of the avatar robot 4 during this time interval and attribute information of the customer input to the customer attribute input area d101 are transmitted to the information processing apparatus 2. The transmitted information is used in learning of the image-attribute learning model m1 and the attribute-operation learning model m2 in the information processing apparatus 2.

### [Learning of Gaze of User]

In the embodiment described above, the image-attribute learning model m1 may further learn a relationship between customer image information and a gaze of the user with respect to an image related to the customer image information. In this case, for example, the information processing apparatus 2 may determine a weight corresponding to each of one or more coordinates or areas of an image related to the customer image information according to a degree of attention of the user (for example, a duration of the user's gaze) with respect to the coordinate or the area, and the image-attribute learning model m1 may further learn a relationship between the customer image information and the weight corresponding to each of the one or more coordinates or areas of the image related to the customer image information. This relationship corresponds to information indicating where the user focuses their attention in the image related to customer image information when determining attribute information of the customer. In other words, the image-attribute learning model m1 may learn "with respect to a predetermined image related to customer image information, where the user focuses their attention and what attribute information of a customer was determined as a result." According to this configuration, since the information processing apparatus 2 can specify attribute information of a customer based on an appropriate location in an image related to customer image information, the attribute information of a customer can be specified with higher accuracy. Note that information related to the gaze of the user may be acquired by the information processing apparatus 2 via the imaging apparatus that the input/output apparatus 5 is equipped with or acquired by the information processing apparatus 2 via another apparatus (for example, a dedicated gaze measurement apparatus).

### [Configuration of Learning Models]

The image-attribute learning model m1 and the attribute-operation learning model m2 may each include one or more learning models.

### [Configuration of Avatar Robot 4]

While the avatar robot 4 has been described in the above embodiment as being equipped with a moving apparatus, the avatar robot 4 is not limited thereto. The avatar robot 4 according to the present disclosure may be replaced by a general-purpose or dedicated terminal apparatus such as a tablet terminal. In this case, the terminal apparatus may be configured to be movable by being connected to an external moving apparatus.

### [Proficiency of User]

In the embodiment described above, the user may be a person with predetermined proficiency related to provision of service. When the user is a proficient person, since training data of higher quality is learned by the image-attribute learning model m1 and the attribute-operation learning model m2, service with higher quality can be provided to customers even when the avatar robot 4 operates autonomously.

### [Learning in Virtual Space (Digital Twin)]

While the user has been described in the above embodiment as operating the avatar robot 4 in the airport AR10 that is a real space, the user is not limited thereto. Specifically, by operating an avatar object corresponding to the avatar robot 4 in a virtual space (in particular, a virtual space of a digital twin), the user may virtually provide service to a customer object that corresponds to a customer in the virtual space. The system 1 may generate a learning model by treating information within such a virtual space as equivalent to information within the real space. More specifically, the system 1 may execute the steps of: acquiring attribute information of a customer object in a virtual space; and by inputting attribute information of the customer in a real space to a learning model trained on a relationship between attribute information of each of one or more other customer objects in the virtual space and operations that a user causes an avatar object in the virtual space to execute using the operation terminal apparatus 3 in order to virtually provide service to each of the one or more other customer objects, causing the avatar robot 4 in the real space to execute an operation corresponding to the attribute information.

### [Method of Operating Avatar Robot 4]

While the avatar robot 4 has been described in the above embodiment as executing one of operations based on operations by the user and operations not based on operations by the user (in other words, operations based on learning models), the avatar robot 4 is not limited thereto. Specifically, the avatar robot 4 may operate autonomously while also operating based on operations by the user. For example, the avatar robot 4 may autonomously execute operations related to mobility based on a learning model and execute operations related to audio output based on operations by the user.

### [Utilization of Information Acquired by Information Processing Apparatus 2]

The information acquired by the information processing apparatus 2 can also be used, for example, to conduct training related to customer service. Specifically, since the image-attribute learning model m1 learns a relationship between customer image information and attribute information of a customer, the image-attribute learning model m1 can create teaching materials that illustrate, for example, "what issues customers with a predetermined appearance might be facing" based on the relationship. In addition, since the attribute-operation learning model m2 learns a relationship between attribute information of a customer and information related to operations of the avatar robot 4, the attribute-operation learning model m2 can create teaching materials that illustrate, for example, "how to interact with customers experiencing difficulties with predetermined issues" based on the relationship. Taken together, teaching materials that illustrate, for example, "how to interact with customers with a predetermined appearance" can be generated based on the information acquired by the information processing apparatus 2. As described above, the information processing apparatus 2 enables customer service know-how, which conventionally tended to be personalized as tacit knowledge, to be formalized as data.

### [Estimation of Content of Utterance and Feedback Thereon]

In one embodiment, the input/output apparatus 5 displays estimated data of content of an utterance made by the user and receives input of feedback from the user on the estimated data. In one example, the estimated data displayed on the input/output apparatus 5 is the result of transcribing the utterance by the user, and feedback thereon may include corrections for discrepancies between the transcription result and the actual utterance by the user. In another example, the estimated data displayed on the input/output apparatus 5 includes estimated data related to a summary, an objective, or the like of the utterance, and feedback thereon may include corrections for discrepancies between the estimated data and the actual summary, objective, or the like of the utterance. Note that processing of generating estimated data of contents of an utterance by the user (in one example, processing related to transcription and processing related to estimating the summary, the objective, or the like of the utterance) from audio data (in one example, waveform data) of the utterance may be executed by, for example, the information processing apparatus 2, the input/output apparatus 5, or another apparatus. In addition, the processing may be executed based on an appropriate speech recognition algorithm and an appropriate natural language processing algorithm.

In the embodiment described above, the attribute-operation learning model m2 has been described as being capable of learning, as training data, data associating information indicating what kind of audio the user had caused the avatar robot 4 to output with attribute information of a customer. In one embodiment, information indicating what kind of audio the user had caused the avatar robot 4 to output may include estimated data of contents of an utterance by the user (for example, a transcription result and estimated data related to the summary, the objective, or the like of the utterance) and may include information obtained by applying a feedback to the estimated data (for example, the transcription result having been corrected by the user and the summary, the objective, or the like of the utterance having been corrected by the user). The information processing apparatus 2 can construct the attribute-operation learning model m2 using high-quality training data by having the attribute-operation learning model m2 learn information obtained by applying feedback to the estimated data.

The information processing apparatus 2 can associate information related to feedback on the estimated data with each of a plurality of users and store and output the information. In one embodiment, the information related to feedback on the estimated data may include information related to the number of feedbacks. In one embodiment, the information related to feedback on the estimated data may include information related to the number of times or a volume by which information obtained by applying feedback has been used as learning data of the attribute-operation learning model m2. In other words, the information processing apparatus 2 can store and output information indicating how much useful feedback each of a plurality of users has executed with respect to the estimated data. As described above, the information obtained by applying feedback to the estimated data may be high-quality training data. According to this configuration, users who actively generate such high-quality training data can be specified from among a plurality of users and their contributions can be incorporated into personnel evaluations and the like.

### [Learning of Subjective Information]

The image-attribute learning model m1 and the attribute-operation learning model m2 may further learn information based on the subjective view of the user in the provision of service via the avatar robot 4. In one embodiment, the information based on the subjective view of the user may include information related to emotions of a customer based on the subjective view of the user. Examples of the emotions of a customer based on the subjective view of the user may include emotions such as "made them happy," "caused them fear," or "failed to satisfy them." In one embodiment, the information based on the subjective view of the user may include information related to the user's own emotions. Examples of the user's own emotions may include emotions such as "I was happy," "I felt fear," or "I was anxious."

In the embodiment described above, the image-attribute learning model m1 has been described to learn training data in which customer image information and attribute information of a customer are associated with each other. In addition, in the embodiment described above, the attribute-operation learning model m2 has been described to learn training data in which attribute information of a customer and information related to operations of the avatar robot 4 for providing service to the customer have been associated with each other. In one embodiment, at least one of these pieces of training data may be associated with information based on the subjective view of the user.

Information based on the subjective view of the user may be used as a weight for training data. When the training data is learned by the image-attribute learning model m1 or the attribute-operation learning model m2, the weight of the training data may have a size (for example, a step width when updating a weight between nodes) or a direction (for example, whether to reduce or increase the weight between nodes) that affects an input/output process of the learning models.

In one example, when the information based on the subjective view of the user that is associated with a certain piece of training data indicates a positive emotion (for example, "I'm happy" or "I was able to convince them"), a positive weight (or a weight with a relatively large value) may be applied to the training data to be learned by the image-attribute learning model m1 or the attribute-operation learning model m2. In another example, when the information based on the subjective view of the user that is associated with a certain piece of training data indicates a negative emotion (for example, "I'm sad" or "They seem angry"), a negative weight (or a weight with a relatively small value) may be applied to the training data to be learned by the image-attribute learning model m1 or the attribute-operation learning model m2.

Training data not associated with information based on the subjective view of the user may be given a neutral weight to be learned by the image-attribute learning model m1 or the attribute-operation learning model m2. In addition, training data associated with information which is based on the subjective view of the user and which indicates a neutral emotion may similarly be given a neutral weight to be learned by the image-attribute learning model m1 or the attribute-operation learning model m2.

According to this configuration, training data related to the provision of service when the user experiences a positive emotion or training data related to the provision of service when a customer was made to experience a positive emotion is to be reflected on the image-attribute learning model m1 and the attribute-operation learning model m2 in a positive manner. This strengthens the tendency of the image-attribute learning model m1 and the attribute-operation learning model m2 to produce output aligned with the training data.

In contrast, training data related to the provision of service when the user experiences a negative emotion or training data related to the provision of service when a customer was made to experience a negative emotion is to be reflected on the image-attribute learning model m1 and the attribute-operation learning model m2 in a negative manner. This strengthens the tendency of the image-attribute learning model m1 and the attribute-operation learning model m2 to produce output not aligned with the training data or contrary to the training data.

### < 7. Other Embodiments >

The present disclosure also includes the following aspects.

### [Supplementary Item 1]

The system 1 according to an aspect of the present disclosure includes: the acquiring unit 100 that acquires attribute information of a customer; the storage unit 14 that stores a learning model (the attribute-operation learning model m2) trained on a relationship between attribute information of each of one or more other customers and operations that a user causes the avatar robot 4 to execute using the operation terminal apparatus 3 in order to provide service to each of the one or more other customers; and the executing unit 104 that, by inputting the attribute information of the customer to the learning model, causes the avatar robot 4 to execute an operation corresponding to the attribute information.

### [Supplementary Item 2]

The system 1 according to supplementary item 1, wherein the attribute information of the customer may include information related to at least a part of age, gender, gaze, action, accompanying person, nationality, belongings, degree of satisfaction, and position of the customer.

### [Supplementary Item 3]

The system 1 according to supplementary item 1 or 2, wherein the attribute information of the customer may be specified based on image information generated by an imaging apparatus of the avatar robot 4 by capturing an image of the customer.

### [Supplementary Item 4]

The system 1 according to supplementary item 3, including: a first apparatus that displays an image related to the image information; and a second apparatus that measures a gaze of the user with respect to the image related to the image information, wherein the attribute information of the customer may be further specified based on another learning model having been trained on a relationship between the image information and the gaze of the user with respect to the image related to the image information.

### [Supplementary Item 5]

The system 1 according to any one of supplementary items 1 to 4, wherein the avatar robot 4 may be an apparatus capable of moving in a predetermined region.

### [Supplementary Item 6]

The system 1 according to supplementary item 5, wherein the operations that the user causes the avatar robot 4 to execute using the operation terminal apparatus 3 may include causing the avatar robot 4 to move toward each of the one or more other customers, and the operations that the executing unit 104 causes the avatar robot 4 to execute may include causing the avatar robot 4 to move toward the customer according to the attribute information of the customer.

### [Supplementary Item 7]

The system 1 according to any one of supplementary items 1 to 6, wherein the avatar robot 4 may be equipped with a display apparatus that displays an avatar, the operations that the user causes the avatar robot 4 to execute using the operation terminal apparatus 3 may include changing the facial expression of the avatar, and the operations that the executing unit 104 causes the avatar robot 4 to execute may include changing the facial expression of the avatar to a facial expression that corresponds to the attribute information of the customer.

### [Supplementary Item 8]

The system 1 according to supplementary item 7, wherein a change in the facial expression of the avatar by the user may be performed based on image information generated by the imaging apparatus of the operation terminal apparatus 3 by capturing an image of the user.

### [Supplementary Item 9]

The system 1 according to any one of supplementary items 1 to 8, wherein the operations that the user causes the avatar robot 4 to execute using the operation terminal apparatus 3 may include causing an audio output apparatus of the avatar robot 4 to output audio, and the operations that the executing unit 104 causes the avatar robot 4 to execute may include causing the audio output apparatus of the avatar robot 4 to output audio that corresponds to the attribute information of the customer.

### [Supplementary Item 10]

The system 1 according to supplementary item 9, wherein the output of audio from the audio output apparatus of the avatar robot 4 caused by the user using the operation terminal apparatus 3 may be performed based on audio information generated by an audio input apparatus of the operation terminal apparatus 3 by acquiring the user's voice.

### [Supplementary Item 11]

The system 1 according to any one of supplementary items 1 to 10 may further include the receiving unit 102 that receives information related to operations input to the operation terminal apparatus 3 by the user, wherein in response to predetermined conditions being satisfied, the executing unit 104 may cause the avatar robot 4 to execute an operation corresponding to an operation received by the receiving unit 102 either in place of or in addition to an operation corresponding to the attribute information of the customer.

### [Supplementary Item 12]

The system 1 according to supplementary item 11, wherein notifications to the customer may be restricted with respect to whether the executing unit 104 is causing the avatar robot 4 to execute an operation corresponding to the attribute information of the customer or an operation corresponding to the operation.

### [Supplementary Item 13]

The system 1 according to any one of supplementary items 1 to 12, wherein the avatar robot 4 may be an apparatus arranged in a facility related to an airport.

### [Supplementary Item 14]

The system 1 according to another aspect of the present disclosure acquires information related to a relationship between attribute information of each of one or more customers and operations that a user causes the avatar robot 4 to execute using the operation terminal apparatus 3 in order to provide service to each of the one or more customers.

### [Supplementary Item 15]

A program according to another aspect of the present disclosure causes a computer of the avatar robot 4 to function as: acquiring means that acquires attribute information of a customer; and executing means that executes an operation corresponding to attribute information of the customer by inputting the attribute information to a learning model trained on a relationship between attribute information of each of one or more other customers and operations that a user causes the avatar robot 4 to execute using the operation terminal apparatus 3 in order to provide service to each of the one or more other customers.

### [Supplementary Item 16]

An information processing method according to another aspect of the present disclosure causes the system 1 including the avatar robot 4 to execute the steps of: acquiring attribute information of a customer; and causing the avatar robot 4 to execute an operation corresponding to the attribute information of the customer by inputting the attribute information to a learning model trained on a relationship between attribute information of each of one or more other customers and operations that a user causes the avatar robot 4 to execute using the operation terminal apparatus 3 in order to provide service to each of the one or more other customers.

### Reference Signs List

- 1: system
- 2: information processing apparatus
- 3: operation terminal apparatus
- 4: avatar robot
- 10: control unit
- 14: storage unit
- 70: computer
- 100: acquiring unit
- 100a: image information acquiring unit
- 100b: attribute information acquiring unit
- 100c: audio information acquiring unit
- 102: receiving unit
- 104: executing unit

## Claims

1. A system, comprising:
an acquiring unit that acquires attribute information of a customer;
a storage unit that stores a learning model trained on a relationship between attribute information of each of one or more other customers and operations that a user causes an avatar robot to execute using an operation terminal apparatus in order to provide service to each of the one or more other customers; and
an executing unit that, by inputting the attribute information of the customer to the learning model, causes the avatar robot to execute an operation corresponding to the attribute information.

2. The system according to claim 1, wherein the attribute information of the customer includes information related to at least a part of age, gender, gaze, action, accompanying person, nationality, belongings, degree of satisfaction, and position of the customer.

3. The system according to claim 1, wherein the attribute information of the customer is specified based on image information generated by an imaging apparatus of the avatar robot by capturing an image of the customer.

4. The system according to claim 3, comprising:
a first apparatus that displays an image related to the image information; and
a second apparatus that measures a gaze of the user with respect to the image related to the image information, wherein
the attribute information of the customer is further specified based on another learning model having been trained on a relationship between the image information and the gaze of the user with respect to the image related to the image information.

5. The system according to claim 1, wherein the avatar robot is an apparatus capable of moving in a predetermined region.

6. The system according to claim 5, wherein the operations that the user causes the avatar robot to execute using the operation terminal apparatus include causing the avatar robot to move toward each of the one or more other customers, and
the operations that the executing unit causes the avatar robot to execute include causing the avatar robot to move toward the customer according to the attribute information of the customer.

7. The system according to claim 1, wherein the avatar robot is equipped with a display apparatus that displays an avatar,
the operations that the user causes the avatar robot to execute using the operation terminal apparatus include changing the facial expression of the avatar, and
the operations that the executing unit causes the avatar robot to execute include changing the facial expression of the avatar to a facial expression that corresponds to the attribute information of the customer.

8. The system according to claim 7, wherein a change in the facial expression of the avatar by the user is performed based on image information generated by an imaging apparatus of the operation terminal apparatus by capturing an image of the user.

9. The system according to claim 1, wherein the operations that the user causes the avatar robot to execute using the operation terminal apparatus include causing an audio output apparatus of the avatar robot to output audio, and
the operations that the executing unit causes the avatar robot to execute include causing the audio output apparatus of the avatar robot to output audio that corresponds to the attribute information of the customer.

10. The system according to claim 9, wherein the output of audio from the audio output apparatus of the avatar robot caused by the user using the operation terminal apparatus is performed based on audio information generated by an audio input apparatus of the operation terminal apparatus by acquiring the user's voice.

11. The system according to claim 1, further comprising a receiving unit that receives information related to operations input to the operation terminal apparatus by the user, wherein
in response to predetermined conditions being satisfied, the executing unit causes the avatar robot to execute an operation corresponding to the operation received by the receiving unit either in place of or in addition to an operation corresponding to the attribute information of the customer.

12. The system according to claim 11, wherein notifications to the customer are restricted with respect to whether the executing unit is causing the avatar robot to execute an operation corresponding to the attribute information of the customer or an operation corresponding to the operation.

13. The system according to any one of claims 1 to 12, wherein the avatar robot is an apparatus arranged in a facility related to an airport.

14. A system that acquires information related to a relationship between attribute information of each of one or more customers and operations that a user causes an avatar robot to execute using an operation terminal apparatus in order to provide service to each of the one or more customers.

15. A program causing a computer of an avatar robot to function as:
acquiring means that acquires attribute information of a customer; and
executing means that executes an operation corresponding to attribute information of the customer by inputting the attribute information to a learning model trained on a relationship between attribute information of each of one or more other customers and operations that a user causes the avatar robot to execute using an operation terminal apparatus in order to provide service to each of the one or more other customers.

16. An information processing method causing a system including an avatar robot to execute the steps of:
acquiring attribute information of a customer; and
causing the avatar robot to execute an operation corresponding to the attribute information of the customer by inputting the attribute information to a learning model trained on a relationship between attribute information of each of one or more other customers and operations that a user causes the avatar robot to execute using an operation terminal apparatus in order to provide service to each of the one or more other customers.
